Europäisches Patentamt

European Patent Office

Office européen des brevets

(19)

(11) **EP 0 637 168 B1**

(12) **EUROPEAN PATENT SPECIFICATION**

(45) Date of publication and mention
of the grant of the patent:
**28.04.1999 Bulletin 1999/17**

(51) Int Cl.⁶: **H04N 5/232**, H04N 7/18

(21) Application number: **94111621.2**

(22) Date of filing: **26.07.1994**

(54) **Control device and control method for image input apparatus**

Steuergerät und Steuerverfahren für Bildeingabevorrichtung

Dispositif et procédé de contrôle d'un appareil d'entrée d'images

(84) Designated Contracting States:
**DE FR GB IT NL**

(30) Priority: **27.07.1993 JP 185366/93**

(43) Date of publication of application:
**01.02.1995 Bulletin 1995/05**

(73) Proprietor: **CANON KABUSHIKI KAISHA
Tokyo (JP)**

(72) Inventor: **Kawahara, Hiroyuki,
c/o Canon Kabushiki Kaisha
Tokyo (JP)**

(74) Representative: **Tiedtke, Harro, Dipl.-Ing.
Patentanwaltsbüro
Tiedtke-Bühling-Kinne & Partner
Bavariaring 4
80336 München (DE)**

(56) References cited:
WO-A-91/02287          GB-A- 2 215 568
US-A- 4 720 805         US-A- 4 945 417

## Description

This invention relates to a control device for an image input apparatus and, more specifically, to a control device which is suitable for remotely operating a camera as in the case of a video conference system.

With the improvement of computers in terms of image processing capability, there have been proposed various techniques in which camera operations, such as zooming, panning and tilting, are performed by operating a computer while the photographic image is being displayed on a monitor screen of the computer. In particular, in a video conference system, it is desirable that the orientation (pan, tilt), magnification, etc., of the camera at the other end of the communications line be remotely controllable. For that purpose, there has been proposed in GB-A-2 215 568, for example, a system in which camera operation factors, which are to be controlled by using a mouse or the like, are displayed on a part of the monitor screen.

However, in the above system, it is rather difficult to perform fine adjustment. Moreover, it is by no means easy to determine which factor is to be controlled, and to what degree, so that the operator has to depend on trial-and-error methods. When a camera is to be remotely controlled as in the case of a video conference system, the time lag involved in transmitting the control signal must also be taken into account. In addition, the image is subjected to high-efficiency coding before being transmitted. Thus, the image quality is generally rather poor when the image information changes fast as in the case of panning, thereby making the camera operation still more difficult. In other words, a fine adjustment is impossible.

Moreover, document US-A-4 720 805 discloses a computerized control system for the pan and tilt functions of a motorized camera head, wherein a video camera is mounted on the camera head which is controllably movable in accordance with control signals for performing a remote control of the camera. Specifically, the picture of an object taken by the camera is evaluated and displayed on a specific display screen, either in the form of a regular TV monitor or in the form of a digitizing tablet. The user of the remotely controlled camera system monitors the object image displayed on the respective display means and initiates a control sequence for repositioning the camera by touching the screen of the monitor with his finger or the digitizing tablet with an electronic stylus to determine an arbitrary position on the display means. The camera system follows the determination action of the observer of the object image and causes an activation of the control system to appropriately drive the pan motor positioner and the tilt motor positioner, respectively, for setting the camera system to the desired position as selected by the observer. The evaluation process upon determining the desired position on the display means comprises a calculation of the distance between a predetermined position on the display means and the arbitrary position determined according to the observer's will. The controlling means of the remotely controlled camera system generates control signals which are supplied to the respective pan or tilt motor positioners to carry out the desired rearrangement of the camera system at a speed dependent on the calculated distance.

It is an object of the present invention to provide a control device for an image input apparatus having improved operability and a corresponding control method.

According to the present invention this object is accomplished by a method of controlling an image input apparatus as claimed in claim 1 as well as by an image input apparatus as claimed in claim 10.

Other objects and features of the present invention will become apparent from the following detailed description of the invention and the accompanying drawings.

Fig. 1 is a schematic block diagram showing an embodiment of the present invention;

Fig. 2 is a schematic diagram of the embodiment connected to a communications network;

Fig. 3 is a flowchart illustrating a first operation of this embodiment;

Fig. 4 is a diagram illustrating how distances as displayed on a monitor screen are related to the corresponding angles of view;

Fig. 5 is a flowchart illustrating a second operation of this embodiment:

Fig. 6 is a flowchart illustrating a third operation of this embodiment; and

Fig. 7 is a flowchart illustrating a fourth operation of this embodiment.

An embodiment of the present invention will now be described with reference to the drawings.

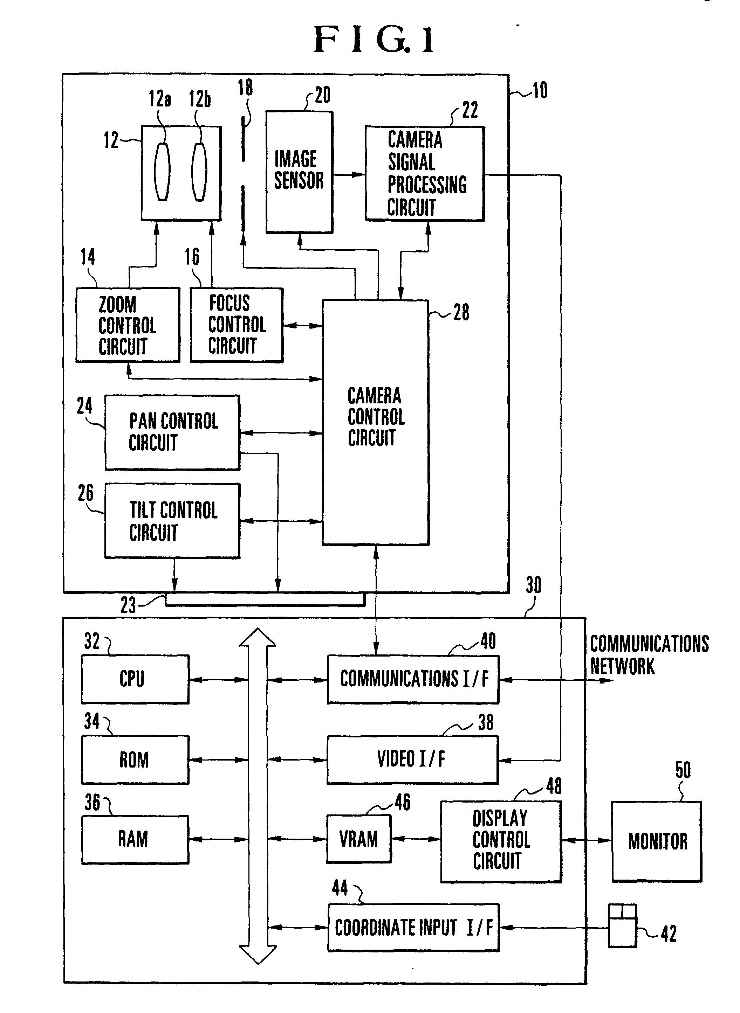

Fig. 1 is a schematic block diagram showing an embodiment of the present invention as applied to a terminal in a video conference system. Numeral 10 indicates a camera for photographing a user of the system; numeral 12 indicates a photographing zoom lens unit; numeral 14 indicates a zoom control circuit for moving a zooming lens 12a of the lens unit 12 in the direction of the optical axis; numeral 16 indicates a focus control circuit for moving a focusing lens 12b of the lens unit 12 in the direction of the optical axis; numeral 20 indicates an image sensor which converts optical images obtained by the lens unit 12 and an aperture 18 to electric signals; and numeral 22 indicates a camera signal processing circuit for converting the electric signals obtained by the image sensor 20 to video signals.

Numeral 24 indicates a pan control circuit which is on a pan head 23 and which moves the photographic optical axis of the camera 10 to the right and left; numeral 26 indicates a tilt control circuit which is on the panhead 23 and which moves the photographic optical axis of the camera 10 up and down; and numeral 28 indicates a camera control circuit for controlling the camera 10 as a whole.

Numeral 30 indicates a computer constructed in the same way as ordinary computers; numeral 32 indicates a CPU for overall control; numeral 34 indicates a ROM; numeral 36 indicates a RAM; numeral 38 indicates a video interface to which output video signals from the camera 10 are input; and numeral 40 indicates a communications interface which transmits and receives data and control signals to and from an external communications network and transmits and receives control signals to and from the camera 10.

Numeral 42 indicates a coordinate input device consisting of a digitizer, a mouse or the like; numeral 44 indicates an interface for the coordinate input device 42; numeral 46 indicates a video memory (VRAM); and numeral 48 indicates a display control device for controlling the image display of a monitor 50 consisting of a CRT, a liquid crystal display or the like.

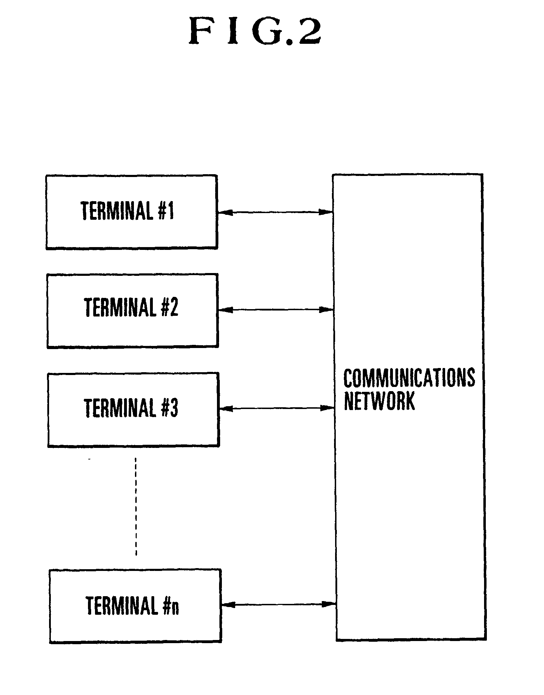

As shown in Fig. 2, a number of terminals as shown in Fig. 1 are connected to each other through the intermediation of a communications network.

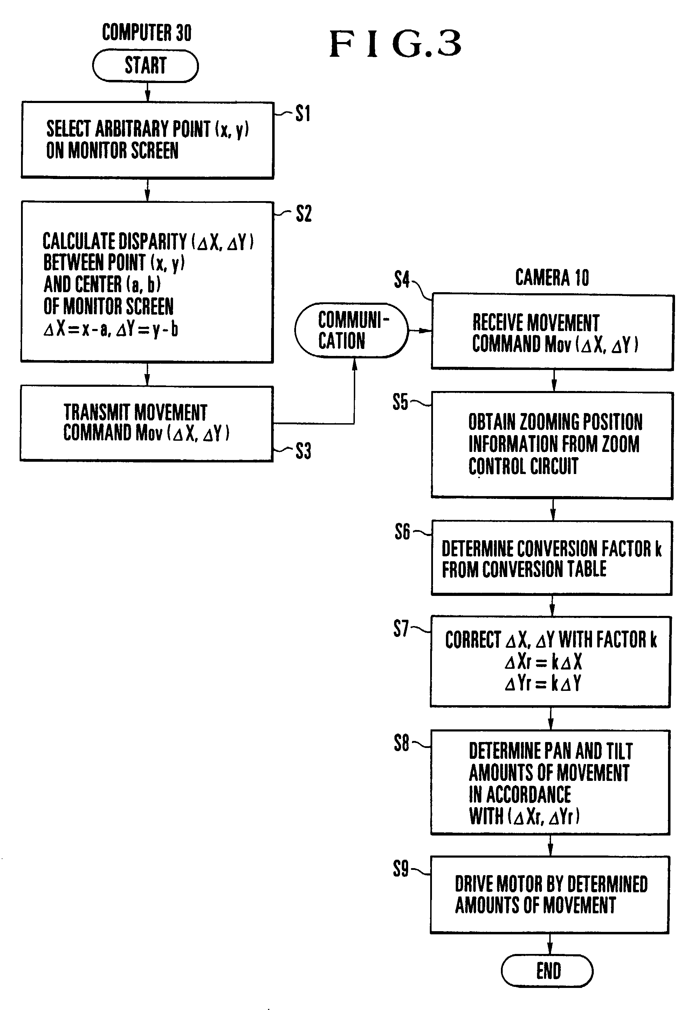

Next, the operation of this embodiment will be described with reference to Figs. 1 and 3. This embodiment functions in a particularly effective manner when applied to a case where it is used to remotely control a camera at an image transmission end terminal from an image reception end terminal in a video conference which is being executed between terminals. However, for convenience of description, the operation of this embodiment will be explained with reference to a case where the camera 10 is operated within the system shown in Fig. 1. The features of this embodiment as utilized in the above two cases are the same except for the fact that the processes of image coding and decoding are omitted in the latter case.

A photographic image obtained by the camera 10 is written to the memory 46 through the video interface 38. The display control circuit 48 successively reads image data stored in the video memory 46, whereby the monitor 50 is controlled to display the image.

The user designates an arbitrary position (x, y), which he or she intends to be the center, through the coordinate input device 42 (S1). The CPU 32 calculates the disparity ($\Delta$X, $\Delta$Y) between the designated position (x, y) and the coordinates (a, b) of the center of the photographic image displayed on the screen (when no window display system is adopted, it is the center of the screen of the monitor 50 and, when a window display system is adopted, it is the center of the display window of the photographic image) (S2). That is, the CPU 32 calculates the following values:

$$\Delta X = x - a$$

$$\Delta Y = y - b$$

Then, the CPU 32 transfers a movement command, e. g., a command Mov ($\Delta$X, $\Delta$Y), to effect movement through a distance corresponding to the disparity ($\Delta$X, $\Delta$Y) to the camera control circuit 28 of the camera 10 through the communications interface 40 (S3).

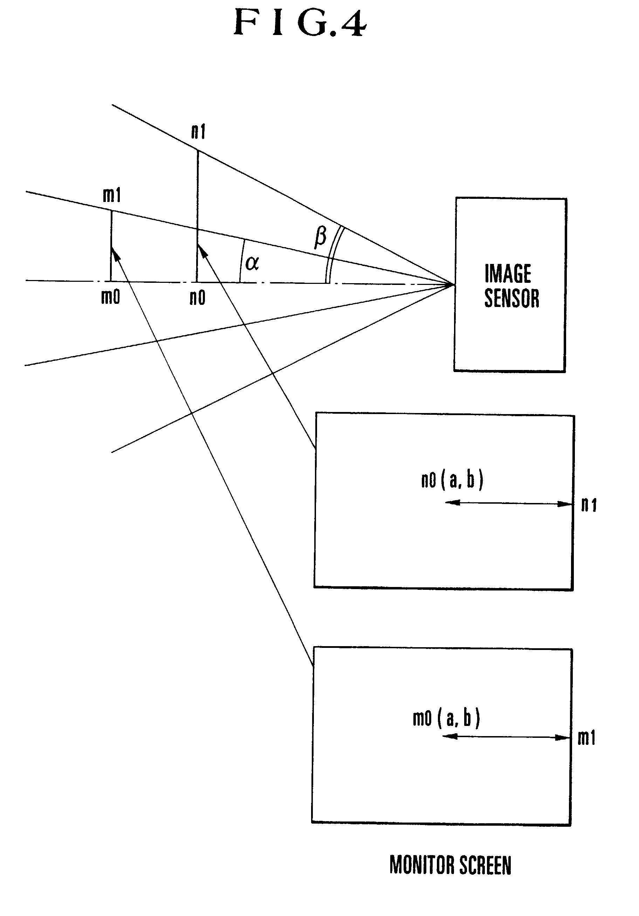

Upon receiving this movement command (S4), the camera control circuit 28 first obtains zooming position information of the zooming lens 12a from the zoom control circuit 14 (S5), and determines the conversion factor k of the amount of movement from the zooming position information thus obtained (S6). That is, the photographic image is displayed in a size corresponding to the variable magnification of the lens unit 12. For example, as shown in Fig. 4, distances which appear the same when displayed on the screen of the monitor 50 are different from each other in the actual field depending upon the magnification, i.e., the angle of view. In view of this, it is necessary to convert a distance on the monitor screen to an amount of movement corresponding to the angle of view (the pan angle and the tilt angle). For this purpose, the camera control circuit 28 is equipped with a conversion table for determining the conversion factor k.

The determined conversion factor k is multiplied by the parameters $\Delta$X and $\Delta$Y of the movement command Mov ($\Delta$X, $\Delta$Y) from the computer 30 to calculate the actual amount of movement ($\Delta$Xr, $\Delta$Yr) (S7). That is, the following values are calculated:

$$\Delta Xr = k\Delta X$$

$$\Delta Yr = k\Delta Y$$

The camera control circuit 28 determines the pan and tilt angles of rotation in accordance with the actual amount of movement ($\Delta$Xr, $\Delta$Yr) (S8) to control the pan control circuit 24 and the tilt control circuit 26, thereby pointing the photographic optical axis of the camera 10 in the designated direction (S9).

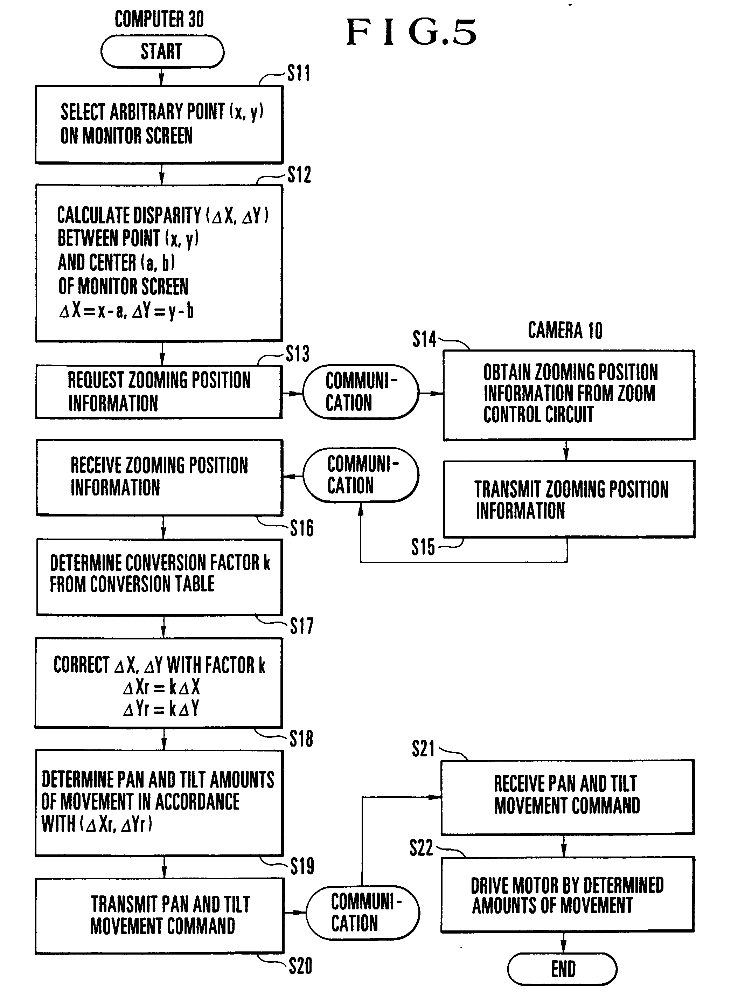

While in Fig. 3 the camera control circuit 28 of the camera 10 calculates an amount of movement of the camera 10 with respect to the amount of movement as designated on the monitor screen, it is naturally also possible for this calculation to be performed by the CPU 32 of the computer 30. Fig. 5 shows a flowchart for the latter case which differs from the above-described case in that the zooming position information of the zooming lens 12a is transferred from the camera 10 to the computer 30, which calculates the pan and tilt angles of movement and transfers them to the camera 10.

That is, the user designates an arbitrary position (x, y), which he or she intends to be the center of the photographic image displayed on the monitor 50, by using the coordinate input device 42 (S11). The CPU 32 calculates the disparity ($\Delta X$, $\Delta Y$) between the designated position (x, y) and the coordinates (a, b) of the center of the photographic image as displayed on the screen (when no window display system is adopted, it is the center of the screen of the monitor 50 and, when a window display system is adopted, it is the center of the display window of the photographic image) (S12). Then, the CPU 32 requires the camera 10 to provide zooming position information (S13).

Upon the request of zooming position information from the computer 30, the camera control circuit 28 of the camera 10 obtains zooming position information from the zoom control circuit 14 (S14), and transfers it to the computer 30 (S15).

The CPU 32 determines the conversion factor k from the zooming position information from the camera 10 (S16, S17). In this example, the CPU 32 is equipped with a conversion factor table for converting a distance on the screen of the monitor 50 to an amount of movement corresponding to the angles of view (the pan and tilt angles), and determines the conversion factor k.

The CPU 32 multiplies the determined conversion factor k by the previously calculated $\Delta X$ and $\Delta Y$ to calculate the actual amount of movement ($\Delta Xr$, $\Delta Yr$) (S18), and determines the pan and tilt angles of rotation corresponding to the calculated actual amount of movement ($\Delta Xr$, $\Delta Yr$), transmitting a movement command of that angle of rotation to the camera 10 (S20).

The camera control circuit 28 of the camera 10 receives the movement command from the computer 30 (S21), and controls the pan control circuit 24 and the tilt control circuit 26 in accordance with the command to point the photographic optical axis of the camera 10 in the designated direction (S22).

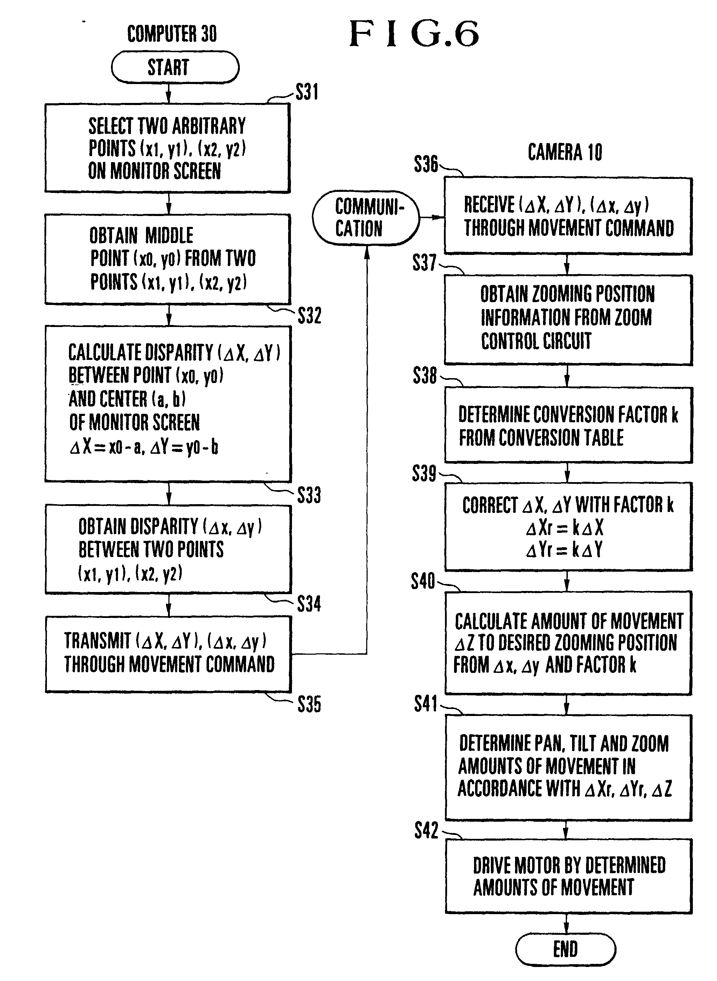

Next, a case in which a photographic range is designated by two points on the screen of the monitor 50 will be described with reference to Fig. 6. The user designates at least two points (x1, y1) and (x2, y2) in the photographic image plane, which is displayed on the monitor 50, by the coordinate input device 42 (S31). The CPU 32 calculates a middle point (x0, y0) thereof from the designated two points (x1, y1) and (x2, y2) (S32). The CPU 32 calculates the difference ($\Delta X$, $\Delta Y$) between the middle point (x0, y0) and the coordinates (a, b) of the center of the photographic-image displaying portion of the monitor 50 (when no window display system is adopted, it is the center of the entire screen of the monitor 50, and when a window display system is adopted, it is the center of the photographic image display window) (S33). That is, the CPU 32 calculates the following values:

$$\Delta X = x0 - a$$

$$\Delta Y = y0 - b$$

Further, the CPU calculates the difference ($\Delta x$, $\Delta y$) between the two designated points, that is, the following values (S34):

$$\Delta x = x1 - x2$$

$$\Delta y = y1 - y2$$

The CPU 32 transfers a movement command in which the differences ($\Delta X$, $\Delta Y$) and ($\Delta x$, $\Delta y$) are used as parameters to the camera 10 (S35). The camera control circuit 28 of the camera 10 receives this command thus transferred (S36), and obtains zooming position information of the zooming lens 12a from the zoom control circuit 14 (S37), and determines the conversion factor k of the pan and tilt amounts of movement from the zooming position information thus obtained (S38).

The camera control circuit 28 multiplies the determined conversion factor k by the parameters $\Delta X$ and $\Delta Y$ of the movement command from the computer 30 to calculate the actual amount of movement ($\Delta Xr$, $\Delta Yr$), that is, the following values (S39):

$$\Delta Xr = k\Delta X$$

$$\Delta Yr = k\Delta Y$$

Further, the camera control circuit 28 calculates the amount of movement to a desired zooming position, $\Delta z$, from the parameters $\Delta x$ and $\Delta y$ from the computer 30 and the factor k (S40).

The camera control circuit 28 calculates the actual amounts of movement corresponding to the actual amount of movement ($\Delta Xr$, $\Delta Yr$) calculated in step S39, and calculates the amount of zooming movement corresponding to the amount of movement $\Delta z$ calculated in step S40 (S41). It then controls the pan control circuit 24, the tilt control circuit 26 and the zoom control circuit 14, pointing the photographic optical axis of the camera 10 in the designated direction and changing the magnification of the lens unit 12 (S42).

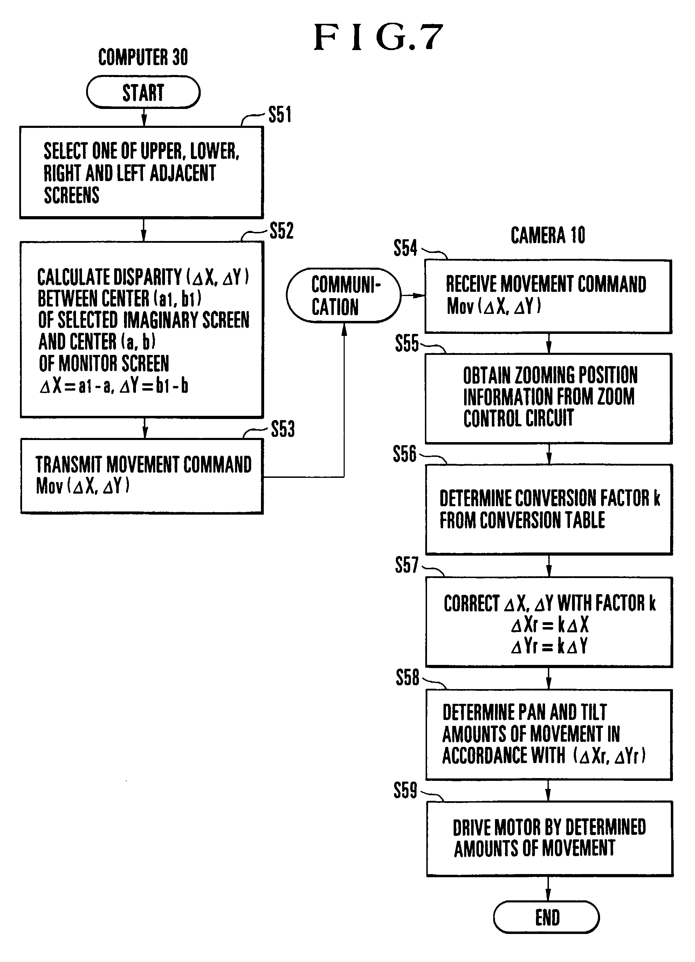

The above-described embodiment is not effective when the user wishes to observe ranges other than that displayed on the monitor screen. In such a case, the user has to move the zooming lens 12a of the camera 10 to wide-angle end through another operation, and then perform the above operation. These procedures could be simplified by the following procedures: the CPU sets imaginary screens above and below, and on the right and left-hand sides, of the display screen displaying an image that is being photographed. These imaginary screens may be adjacent to, or partly overlap, or spaced apart from, the actual display screen. Fig. 7 shows the flowchart of an operation utilizing such imaginary screens.

The user selects one of the imaginary screens by the coordinate input device 42 or the like (S51). The CPU 32 calculates the disparity between the center (a1, b1) of the selected imaginary screen and the coordinates (a, b) of the center of the displayed photographic image (when no window display system is adopted, it is the center of the screen of the monitor 50 and, when a window display system is adopted, it is the center of the display window of the photographic image), that is, the CPU calculates the following values (S52):

$$\Delta X = a1 - a$$

$$\Delta Y = b1 - b$$

Then, the CPU 32 transfers a movement command corresponding to the difference ($\Delta X$, $\Delta Y$), e.g., Mov ($\Delta X$, $\Delta Y$), to the camera control circuit 28 of the camera 10 through the communications interface 40 (S53).

The camera control circuit 28, which receives this movement command (S54), first obtains the zooming position information of the zooming lens 12a from the zoom control circuit 14 (S55), and then determines the conversion factor k of the amount of movement from the obtained zooming position information, as in the abvoe-described case (S56).

The camera control circuit 28 multiplies the determined conversion factor k by the parameters $\Delta X$ and $\Delta Y$ of the movement command Mov ($\Delta X$, $\Delta Y$) to calculate the actual amount of movement ($\Delta Xr$, $\Delta Yr$) (S57). That is,

$$\Delta Xr = k\Delta X$$

$$\Delta Yr = k\Delta Y$$

Further, the camera control circuit 28 determines the pan and tilt angles of rotation corresponding to the actual amount of movement ($\Delta Xr$, $\Delta Yr$), (S58), and controls the pan control circuit 24 and the tilt control circuit 26 to point the photographic optical axis of the camera 10 in the designated direction.

As stated above, the present invention is obviously also applicable to a case where a camera at an image-transmission-end terminal is to be remotely controlled from an image-reception-end terminal in a video conference or the like.

As can be readily understood from the above description, in accordance with this embodiment, a visual and intuitive camera operation can be realized, thereby attaining an improvement in operability. In particular, this embodiment proves markedly effective in cases where remote control is to be performed.

While the above embodiment has been described as applied to optical zooming, which is effected by moving a zooming lens, it is also applicable to electronic zooming, in which captured image data is electronically processed.

**Claims**

1. Method of controlling by a control device the orientation of an image input apparatus equipped with an optical system having a variable magnification lens, said method comprising the steps of:

    (a) displaying input images on a display means,
    (b) designating by an input means an arbitrary position on a display screen of said display means, and
    (c) calculating using a calculating means a distance between a predetermined position and said designated arbitrary position on the display screen,

    **characterized by the steps of**

    (d) converting by said calculating means said calculated distance into an actual amount of movement on the basis of magnification information from said variable magnification lens, and
    (e) controlling the orientation of said image input apparatus by operating a panhead thereof on the basis of the actual amount of movement.

2. Method according to claim 1, characterized by the step of causing the optical axis of said optical system to move in such a way that said arbitrary position on said display screen comes to coincide with said predetermined position.

3. Method according to claim 2, characterized in that said predetermined position on said display screen is the center of said display screen.

4. Method according to claim 3, characterized by the step of causing said variable magnification lens to move in the direction of an optical axis of said optical system.

5. Method according to claim 2, characterized by the step of designating by said input means a plurality of arbitrary positions.

6. Method according to claim 5, characterized by the step of calculating the distance between a middle position of said plurality of arbitrary positions and said predetermined position.

7. Method according to claim 6, characterized by the step of causing the optical axis of said optical system to move in such a way that said middle position of said plurality of arbitrary positions on said display screen comes to coincide with said predetermined position.

8. Method according to claim 3, characterized by the steps of

calculating by said calculating means the distance between the center of said display screen and said arbitrary position, and causing by said control means the orientation of said image input apparatus to change such that a displayed image moves in such a way that said arbitrary position on said display screen comes to coincide with the center of said display screen.

9. Method according to claim 1, characterized by the step of transferring a movement command from said control device to said image input apparatus via a communications interface (40) for providing control of said image input apparatus.

10. A control device for controlling the orientation of an image input apparatus which is equipped with an optical system (12) having a variable magnification lens (12a), said control device comprising:

(a) display means (50) for displaying input images,
(b) input means (42) which enables an arbitrary position on a display screen of said display means (50) to be designated,
(c) calculation means (32) for calculating the distance between a predetermined position on said display screen and said designated arbitrary position on said display screen, and
(d) a panhead (23) for varying the orientation of said image input apparatus,

**characterized in that**

(e) said calculation means (32) converts said calculated distance into an actual amount of movement on the basis of magnification information from said variable magnification lens (12a), and
(f) a control means (28) is provided for controlling the orientation of said image input apparatus via said panhead on the basis of the actual amount of movement.

11. A control device according to claim 10, characterized in that said control means (28) causes the optical axis of said optical system (12) to move in such a way that said designated arbitrary position on said displays screen comes to coincide with said predetermined position.

12. A control device according to claim 11, characterized in that said predetermined position on said display screen is the center of said display screen.

13. A control device according to claim 10, characterized by further comprising a zoom means (12a, 14) for zooming input images, wherein said zoom means (12a, 14) causes said magnification varying lens (12a) to move in the direction of an optical axis of said optical system (12).

14. A control device according to claim 10, characterized in that said input means (42) enables a plurality of arbitrary positions to be designated.

15. A control device according to claim 14, characterized in that said calculation means (32) calculates the distance between a middle position of said plurality of designated arbitrary positions and said predetermined position.

16. A control device according to claim 15, characterized in that said control means (28) causes the optical axis of said optical system (12) to move in such a way that said middle position of said plurality of designated arbitrary positions on said display screen comes to coincide with said predetermined position.

17. A control device according to claim 10, characterized in that said calculation means (32) calculates the distance between the center of said display screen and said designated arbitrary position, and said control means (28) causes the orientation of said image input apparatus to change such that a displayed image moves in such a way that said designated arbitrary position on said display screen comes to coincide with the center of said display screen.

18. A control device according to claim 17, characterized in that said calculation means (32) calculates said distance in accordance with an angle of view of said optical system (12).

19. A control device according to claim 17, characterized in that said control means (28) is adapted for transmitting a movement command from said control device to the image input apparatus via a communications interface (40).

20. A control device according to claim 10, characterized in that said input means (42) includes a mouse.

**Patentansprüche**

1. Steuerverfahren mittels einer Steuervorrichtung für die Ausrichtung eines Bildeingabegeräts, das mit einem optischen System mit einer variablen Vergrößerungslinse ausgestattet ist,
   wobei das Verfahren die Schritte aufweist:

   a) Anzeigen von eingegebenen Bildern auf einer Anzeigeeinrichtung,
   b) Bestimmen einer beliebigen Position auf einem Anzeigebildschirm der Anzeigeeinrichtung mittels einer Eingabeeinrichtung, und
   c) Berechnen einer Distanz zwischen einer vorbestimmten Position und der beliebigen Position auf dem Anzeigebildschirm unter Verwendung einer Recheneinrichtung,

   **gekennzeichnet durch** die Schritte

   d) Umwandeln der berechneten Distanz in einen tatsächlichen Bewegungsbetrag durch die Recheneinrichtung auf der Grundlage von Vergrößerungsinformationen von der variablen Vergrößerungslinse, und
   e) Steuern der Ausrichtung des Bildeingabegeräts durch Bedienen eines zugehörigen Schwenkkopfs auf der Grundlage des tatsächlichen Bewegungsbetrags.

2. Verfahren nach Anspruch 1, **gekennzeichnet durch** den Schritt, eine derartige Bewegung einer optischen Achse des optischen Systems zu veranlassen, daß die beliebige Position auf dem Anzeigebildschirm mit der vorbestimmten Position übereinstimmt.

3. Verfahren nach Anspruch 2, **dadurch gekennzeichnet, daß** die vorbestimmte Position auf dem Anzeigebildschirm das Zentrum des Anzeigebildschirms darstellt.

4. Verfahren nach Anspruch 3, **gekennzeichnet durch** den Schritt, eine Bewegung der variablen Vergrößerungslinse in Richtung einer optischen Achse des optischen Systems zu veranlassen.

5. Verfahren nach Anspruch 2, **gekennzeichnet durch** den Schritt, eine Vielzahl von beliebigen Positionen mittels der Eingabeeinrichtung zu bestimmen.

6. Verfahren nach Anspruch 5, **gekennzeichnet durch** den Schritt, die Distanz zwischen einer Mittelposition der Vielzahl von beliebigen Positionen und der vorbestimmten Position zu berechnen.

7. Verfahren nach Anspruch 6, **gekennzeichnet durch** den Schritt, eine derartige Bewegung einer optischen Achse des optischen Systems zu veranlassen, daß die Mittelposition der Vielzahl von beliebigen Positionen auf dem Anzeigebildschirm mit der vorbestimmten Position übereinstimmt.

8. Verfahren nach Anspruch 3, **gekennzeichnet durch** die Schritte

   Berechnen der Distanz zwischen dem Zentrum des Anzeigebildschirms und der beliebigen Position mittels der Recheneinrichtung und mittels der Steuereinrichtung eine derartige Änderung der Ausrichtung des Bildeingabegeräts zu veranlassen, daß sich ein angezeigtes Bild auf eine derartige Weise bewegt, daß die beliebige Position auf dem Anzeigebildschirm mit dem Zentrum des Anzeigebildschirms übereinstimmt.

9. Verfahren nach Anspruch 1, **gekennzeichnet durch** den Schritt, einen Bewegungsbefehl von der Steuervorrichtung zu dem Bildeingabegerät über eine Kommunikationsschnittstelle (40) zur Bereitstellung einer Steuerung des Bildeingabegeräts zu senden.

10. Steuervorrichtung zur Steuerung der Ausrichtung eines Bildeingabegeräts, das mit einem optischen System (12) mit einer variablen Vergrößerungslinse (12a) ausgestattet ist, wobei die Steuervorrichtung umfaßt:

    a) eine Anzeigeeinrichtung (50) zur Anzeige eingegebener Bilder,
    b) eine Eingabeeinrichtung (42), die die Bestimmung einer beliebigen Position auf einem Anzeigebildschirm der Anzeigeeinrichtung (50) ermöglicht,
    c) eine Recheneinrichtung (32) zur Berechnung der Distanz zwischen einer vorbestimmten Position auf dem Anzeigebildschirm und der bestimmten beliebigen Position auf dem Anzeigebildschirm, und
    d) einen Schwenkkopf (23) zur Veränderung der Ausrichtung des Bildeingabegeräts,

    **dadurch gekennzeichnet, daß**

    e) die Recheneinrichtung (32) die berechnete Distanz in einen tatsächlichen Bewegungsbetrag auf der Grundlage von Vergrößerungsinformationen von der variablen Vergrößerungslinse (12a) umwandelt, und
    f) eine Steuereinrichtung (28) zur Steuerung der Ausrichtung des Bildeingabegeräts über den Schwenkkopf auf der Grundlage des tatsächlichen Bewegungsbetrags vorgesehen ist.

**11.** Steuervorrichtung nach Anspruch 10, **dadurch gekennzeichnet, daß** die Steuereinrichtung (28) eine derartige Bewegung einer optischen Achse des optischen Systems (12) veranlaßt, daß die bestimmte beliebige Position auf dem Anzeigebildschirm mit der vorbestimmten Position übereinstimmt.

**12.** Steuervorrichtung nach Anspruch 11, **dadurch gekennzeichnet, daß** sich die vorbestimmte Position auf dem Anzeigebildschirm im Zentrum des Anzeigebildschirms befindet.

**13.** Steuervorrichtung nach Anspruch 10, **dadurch gekennzeichnet, daß** sie eine Zoom-Einrichtung (12a, 14) zum Zoomen von eingegebenen Bildern aufweist, wobei die Zoom-Einrichtung (12a, 14) veranlaßt, daß sich die variable Vergrößerungslinse (12a) in die Richtung einer optischen Achse des optischen Systems (12) bewegt.

**14.** Steuervorrichtung nach Anspruch 10, **dadurch gekennzeichnet, daß** die Eingabeeinrichtung (42) die Bestimmung einer Vielzahl von beliebigen Positionen ermöglicht.

**15.** Steuervorrichtung nach Anspruch 14, **dadurch gekennzeichnet, daß** die Recheneinrichtung (32) die Distanz zwischen einer Mittelposition der Vielzahl von bestimmten beliebigen Positionen und der vorbestimmten Position berechnet.

**16.** Steuervorrichtung nach Anspruch 15, **dadurch gekennzeichnet, daß** die Steuereinrichtung (28) eine derartige Bewegung einer optischen Achse des optischen Systems (12) veranlaßt, daß die Mittelposition der Vielzahl von bestimmten beliebigen Positionen auf dem Anzeigebildschirm mit der vorbestimmten Position übereinstimmt.

**17.** Steuervorrichtung nach Anspruch 10, **dadurch gekennzeichnet, daß** die Recheneinrichtung (32) die Distanz zwischen dem Zentrum des Anzeigebildschirms und der bestimmten beliebigen Position berechnet, wobei die Steuereinrichtung (28) eine derartige Veränderung der Ausrichtung des Bildeingabegeräts veranlaßt, daß sich ein angezeigtes Bild auf eine derartige Weise bewegt, daß die bestimmte beliebige Position auf dem Anzeigebildschirm mit dem Zentrum des Anzeigebildschirms übereinstimmt.

**18.** Steuervorrichtung nach Anspruch 17, **dadurch gekennzeichnet, daß** die Recheneinrichtung (32) die Distanz entsprechend einem Betrachtungswinkel des optischen Systems (12) berechnet.

**19.** Steuervorrichtung nach Anspruch 17, **dadurch gekennzeichnet, daß** die Steuereinrichtung (28) einen Bewegungsbefehl von der Steuervorrichtung zu dem Bildeingabegerät über eine Kommunikationsschnittstelle (40) senden kann.

**20.** Steuervorrichtung nach Anspruch 10, **dadurch gekennzeichnet, daß** die Eingabeeinrichtung (42) eine Maus umfaßt.

**Revendications**

**1.** Procédé pour commander par un dispositif de commande l'orientation d'un appareil d'entrée d'image muni d'un système optique comportant une lentille à grossissement variable,

ledit procédé comprenant les étapes consistant à :

(a) visualiser des images d'entrée sur un moyen d'affichage,
(b) désigner par un moyen d'entrée une position arbitraire sur un écran d'affichage dudit moyen d'affichage, et
(c) calculer en utilisant un moyen de calcul une distance entre une position prédéterminée et ladite position arbitraire désignée sur l'écran d'affichage,

**caractérisé par les étapes consistant à**

(d) convertir par ledit moyen de calcul ladite distance calculée en une quantité réelle de déplacement sur la base des informations de grossissement provenant de ladite lentille à grossissement variable, et
(e) commander l'orientation dudit appareil d'entrée d'image par l'actionnement d'une tête de panoramique de celui-ci sur la base de la quantité réelle de déplacement.

**2.** Procédé selon la revendication 1, caractérisé par l'étape consistant à amener l'axe optique dudit système optique à se déplacer d'une manière telle que ladite position arbitraire sur ledit écran d'affichage vient à coïncider avec ladite position prédéterminée.

**3.** Procédé selon la revendication 2, caractérisé en ce que ladite position prédéterminée sur ledit écran d'affichage est le centre dudit écran d'affichage.

**4.** Procédé selon la revendication 3, caractérisé par l'étape consistant à amener ladite lentille à grossissement variable à se déplacer dans la direction d'un axe optique dudit système optique.

**5.** Procédé selon la revendication 2, caractérisé par l'étape consistant à désigner par ledit moyen d'entrée une pluralité de positions arbitraires.

6. Procédé selon la revendication 5, caractérisé par l'étape consistant à calculer la distance entre une position au milieu de ladite pluralité de positions arbitraires et ladite position prédéterminée.

7. Procédé selon la revendication 6, caractérisé par l'étape consistant à amener l'axe optique dudit système optique à se déplacer d'une manière telle que ladite position au milieu de ladite pluralité de positions arbitraires sur ledit écran d'affichage vient à coïncider avec ladite position prédéterminée.

8. Procédé selon la revendication 3, caractérisé par les étapes consistant à

   calculer par ledit moyen de calcul la distance entre le centre dudit écran d'affichage et ladite position arbitraire, et
   amener par ledit moyen de commande l'orientation dudit appareil d'entrée d'image à changer de sorte qu'une image affichée se déplace d'une manière telle que ladite position arbitraire sur ledit écran d'affichage vient à coïncider avec le centre dudit écran d'affichage.

9. Procédé selon la revendication 1, caractérisé par l'étape consistant à transférer un ordre de déplacement à partir dudit dispositif de commande audit appareil d'entrée d'image via une interface de communication (40) pour assurer la commande dudit appareil d'entrée d'image.

10. Dispositif de commande pour commander l'orientation d'un appareil d'entrée d'image qui est muni d'un système optique (12) comportant une lentille à grossissement variable (12a), ledit dispositif de commande comprenant :

    (a) un moyen d'affichage (50) pour afficher des images d'entrée,
    (b) un moyen d'entrée (42), qui permet qu'une position arbitraire sur un écran d'affichage dudit moyen d'affichage (50) soit désignée,
    (c) un moyen de calcul (32) pour calculer la distance entre une position prédéterminée sur ledit écran d'affichage et ladite position arbitraire désignée sur ledit écran d'affichage, et
    (d) une tête de panoramique (23) pour faire varier l'orientation dudit appareil d'entrée d'image,

    **caractérisé en ce que**

    (e) ledit moyen de calcul (32) convertit ladite distance calculée en une quantité réelle de déplacement sur la base des informations de grossissement provenant de ladite lentille à grossissement variable (12a), et
    (f) un moyen de commande (28) est prévu pour commander l'orientation dudit appareil d'entrée d'image via ladite tête de panoramique sur la base de la quantité réelle de déplacement.

11. Dispositif de commande selon la revendication 10, caractérisé en ce que ledit moyen de commande (28) amène l'axe optique dudit système optique (12) à se déplacer d'une manière telle que ladite position arbitraire désignée sur ledit écran d'affichage vient à coïncider avec ladite position prédéterminée.

12. Dispositif de commande selon la revendication 11, caractérisé en ce que ladite position prédéterminée sur ledit écran d'affichage est le centre dudit écran d'affichage.

13. Dispositif de commande selon la revendication 10, caractérisé en ce qu'il comprend en outre, un moyen de zoom (12a, 14) pour effectuer un zoom des images d'entrée, dans lequel ledit moyen de zoom (12a, 14) amène ladite lentille à grossissement variable (12a) à se déplacer dans la direction d'un axe optique dudit système optique (12).

14. Dispositif de commande selon la revendication 10, caractérisé en ce que ledit moyen d'entrée (42) permet qu'une pluralité de positions arbitraires soient désignées.

15. Dispositif de commande selon la revendication 14, caractérisé en ce que ledit moyen de calcul (32) calcule la distance entre une position au milieu de ladite pluralité de positions arbitraires désignées et ladite position prédéterminée.

16. Dispositif de commande selon la revendication 15, caractérisé en ce que ledit moyen de commande (28) amène l'axe optique dudit système optique (12) à se déplacer d'une manière telle que ladite position au milieu de ladite pluralité de positions arbitraires désignées sur ledit écran d'affichage vienne à coïncider avec ladite position prédéterminée.

17. Dispositif de commande selon la revendication 10, caractérisé en ce que ledit moyen de calcul (32) calcule la distance entre le centre dudit écran d'affichage et ladite position arbitraire désignée, et ledit moyen de commande (28) amène l'orientation dudit appareil d'entrée d'image à changer de sorte qu'une image affichée se déplace d'une manière telle que ladite position arbitraire désignée sur ledit écran d'affichage vient à coïncider avec le centre dudit écran d'affichage.

18. Dispositif de commande selon la revendication 17, caractérisé en ce que ledit moyen de calcul (32) calcule ladite distance en conformité avec un angle de visée dudit système optique (12).

19. Dispositif de commande selon la revendication 17, caractérisé en ce que ledit moyen de commande (28) est conçu pour transmettre un ordre de déplacement à partir dudit dispositif de commande à l'appareil d'entrée d'image, via une interface de communication (40).

20. Dispositif de commande selon la revendication 10, caractérisé en ce que ledit moyen d'entrée (42) inclut une souris.

# F I G. 1

# FIG.2

# F I G. 3

**COMPUTER 30**

START

S1 — SELECT ARBITRARY POINT (x, y) ON MONITOR SCREEN

S2 — CALCULATE DISPARITY ($\Delta X$, $\Delta Y$) BETWEEN POINT (x, y) AND CENTER (a, b) OF MONITOR SCREEN
$\Delta X = x - a$, $\Delta Y = y - b$

COMMUNI-CATION

S3 — TRANSMIT MOVEMENT COMMAND Mov ($\Delta X$, $\Delta Y$)

**CAMERA 10**

S4 — RECEIVE MOVEMENT COMMAND Mov ($\Delta X$, $\Delta Y$)

S5 — OBTAIN ZOOMING POSITION INFORMATION FROM ZOOM CONTROL CIRCUIT

S6 — DETERMINE CONVERSION FACTOR k FROM CONVERSION TABLE

S7 — CORRECT $\Delta X$, $\Delta Y$ WITH FACTOR k
$\Delta Xr = k \Delta X$
$\Delta Yr = k \Delta Y$

S8 — DETERMINE PAN AND TILT AMOUNTS OF MOVEMENT IN ACCORDANCE WITH ($\Delta Xr$, $\Delta Yr$)

S9 — DRIVE MOTOR BY DETERMINED AMOUNTS OF MOVEMENT

END

# F I G.4

IMAGE
SENSOR

n0 ( a, b )  ←→  n1

m0 ( a, b )  ←→  m1

MONITOR SCREEN

14

# FIG.5

**COMPUTER 30**

START

↓ S11

SELECT ARBITRARY POINT (x, y) ON MONITOR SCREEN

↓ S12

CALCULATE DISPARITY (△X, △Y) BETWEEN POINT (x, y) AND CENTER (a, b) OF MONITOR SCREEN
$\triangle X = x - a, \triangle Y = y - b$

↓ S13

REQUEST ZOOMING POSITION INFORMATION

→ COMMUNI-CATION →

S14

**CAMERA 10**

OBTAIN ZOOMING POSITION INFORMATION FROM ZOOM CONTROL CIRCUIT

↓

RECEIVE ZOOMING POSITION INFORMATION

← COMMUNI-CATION ←

TRANSMIT ZOOMING POSITION INFORMATION

S15

↓ S16

DETERMINE CONVERSION FACTOR k FROM CONVERSION TABLE

↓ S17

CORRECT △X, △Y WITH FACTOR k
$\triangle Xr = k \triangle X$
$\triangle Yr = k \triangle Y$

↓ S18

S21

RECEIVE PAN AND TILT MOVEMENT COMMAND

DETERMINE PAN AND TILT AMOUNTS OF MOVEMENT IN ACCORDANCE WITH (△Xr, △Yr)

S22

DRIVE MOTOR BY DETERMINED AMOUNTS OF MOVEMENT

↓ S19

TRANSMIT PAN AND TILT MOVEMENT COMMAND

→ COMMUNI-CATION →

↓

END

S20

15

# F I G.6

**COMPUTER 30**

START

S31
SELECT TWO ARBITRARY POINTS (x1, y1), (x2, y2) ON MONITOR SCREEN

OBTAIN MIDDLE POINT (x0, y0) FROM TWO POINTS (x1, y1), (x2, y2)
S32

CALCULATE DISPARITY ($\triangle X$, $\triangle Y$) BETWEEN POINT (x0, y0) AND CENTER (a, b) OF MONITOR SCREEN
$\triangle X = x0 - a$, $\triangle Y = y0 - b$
S33

OBTAIN DISPARITY ($\triangle x$, $\triangle y$) BETWEEN TWO POINTS (x1, y1), (x2, y2)
S34

TRANSMIT ($\triangle X$, $\triangle Y$), ($\triangle x$, $\triangle y$) THROUGH MOVEMENT COMMAND
S35

COMMUNI-CATION

**CAMERA 10**

S36
RECEIVE ($\triangle X$, $\triangle Y$), ($\triangle x$, $\triangle y$) THROUGH MOVEMENT COMMAND

S37
OBTAIN ZOOMING POSITION INFORMATION FROM ZOOM CONTROL CIRCUIT

S38
DETERMINE CONVERSION FACTOR k FROM CONVERSION TABLE

S39
CORRECT $\triangle X$, $\triangle Y$ WITH FACTOR k
$\triangle Xr = k \triangle X$
$\triangle Yr = k \triangle Y$

S40
CALCULATE AMOUNT OF MOVEMENT $\triangle Z$ TO DESIRED ZOOMING POSITION FROM $\triangle x$, $\triangle y$ AND FACTOR k

S41
DETERMINE PAN, TILT AND ZOOM AMOUNTS OF MOVEMENT IN ACCORDANCE WITH $\triangle Xr$, $\triangle Yr$, $\triangle Z$

S42
DRIVE MOTOR BY DETERMINED AMOUNTS OF MOVEMENT

END

# F I G.7

**COMPUTER 30**

START

S51
SELECT ONE OF UPPER, LOWER, RIGHT AND LEFT ADJACENT SCREENS

S52
CALCULATE DISPARITY $(\triangle X, \triangle Y)$ BETWEEN CENTER (a1, b1) OF SELECTED IMAGINARY SCREEN AND CENTER (a, b) OF MONITOR SCREEN
$\triangle X = a1 - a, \triangle Y = b1 - b$

S53
TRANSMIT MOVEMENT COMMAND Mov $(\triangle X, \triangle Y)$

COMMUNI-CATION

**CAMERA 10**

S54
RECEIVE MOVEMENT COMMAND Mov $(\triangle X, \triangle Y)$

S55
OBTAIN ZOOMING POSITION INFORMATION FROM ZOOM CONTROL CIRCUIT

S56
DETERMINE CONVERSION FACTOR k FROM CONVERSION TABLE

S57
CORRECT $\triangle X, \triangle Y$ WITH FACTOR k
$\triangle Xr = k \triangle X$
$\triangle Yr = k \triangle Y$

S58
DETERMINE PAN AND TILT AMOUNTS OF MOVEMENT IN ACCORDANCE WITH $(\triangle Xr, \triangle Yr)$

S59
DRIVE MOTOR BY DETERMINED AMOUNTS OF MOVEMENT

END